# EUROPÄISCHE PATENTSCHRIFT

(11) **EP 3 339 651 B1**
(45) Veröffentlichungstag und Bekanntmachung des Hinweises auf die Patenterteilung: **01.05.2019**
(21) Anmeldenummer: 16206675.7
(22) Anmeldetag: 23.12.2016
(51) Int. Cl.: F04D 17/16, F04D 19/04, F04D 25/06, F04D 27/02, F16K 99/00

(54) **VAKUUMPUMPE**
VACUUM PUMP
POMPE À VIDE

(43) Veröffentlichungstag der Anmeldung: 27.06.2018
(73) Patentinhaber: PFEIFFER VACUUM GMBH, 35614 Asslar (DE)
(72) Erfinder: Hofmann, Bernd, 35578 Wetzlar (DE); Mekota, Mirko, 35630 Ehringshausen (DE)
(74) Vertreter: Manitz Finsterwald Patent- und Rechtsanwaltspartnerschaft mbB

(56) Entgegenhaltungen:
- EP-A1- 2 960 520
- WO-A2-02/060582
- DE-U1-202012 001 202
- JP-B2- 3 657 278
- US-A1- 2005 005 689

## Beschreibung

Die vorliegende Erfindung betrifft eine Vakuumpumpe, insbesondere eine Turbomolekularpumpe, umfassend ein Gehäuse, das wenigstens einen Innenraum umgibt, in welchem ein Vakuum erzeugbar ist, und das den Innenraum von einem Außenraum, insbesondere der Atmosphäre, trennt, und wenigstens eine Leiterplatte, insbesondere Platine, die in dem oder am Gehäuse angeordnet ist.

Aus dem Stand der Technik, zum Beispiel aus der EP 2960520 A1, ist es bekannt, an einer Vakuumpumpe, am Gehäuse ein Ventil anzuordnen, zum Beispiel um den Innenraum des Gehäuses über das Ventil belüften zu können. Das Ventil dient dann als Belüftungsventil. Ein derartiges Ventil kann auch als Gasventil, insbesondere als Sperrgasventil, vorgesehen sein. Über das Ventil kann somit ein Gas, insbesondere Sperrgas, in den Innenraum der Vakuumvorrichtung gebracht werden. Das Ventil kann als nachträglich am Gehäuse montierbares Zubehör erhältlich sein oder bereits während der Fertigung an der Vakuumvorrichtung montiert werden. Man unterscheidet dabei zwischen an das Gehäuse angebaute und in das Gehäuse eingebaute Ventile.

Bekannte Vakuumpumpen können außerdem eine Leiterplatte aufweisen, die am oder im Gehäuse angeordnet ist und auf der elektrische und/oder elektronische Einrichtungen der Vakuumpumpe untergebracht sein können.

Der vorliegenden Erfindung liegt die Aufgabe zugrunde, eine verbesserte Vakuumpumpe bereitzustellen.

Die Aufgabe wird durch die Merkmale des Anspruchs 1 gelöst. Bevorzugte Ausführungsformen und Weiterbildungen der Erfindung sind in den abhängigen Ansprüchen beschrieben.

Die Aufgabe wird dadurch gelöst, dass eine Vakuumpumpe der eingangs genannten Art derart weitergebildet wird, dass an oder auf der Leiterplatte wenigstens ein von Fluid durchströmbares Ventil oder Messgerät angeordnet ist, und eine mit dem Innenraum und/oder dem Außenraum in Verbindung stehende Fluidverbindung durch das Ventil oder Messgerät geführt ist.

Im Folgenden werden die Ausdrücke "Vakuumvorrichtung" und "Vakuumeinrichtung" zur Bezeichnung einer Vakuumpumpe und der Ausdruck "Vakuumbauteil" zur Bezeichnung eines Ventils oder Messgeräts verwendet.

Die Leiterplatte kann als elektrische Durchführung und/oder als trennendes Element zwischen dem Innenraum und dem Außenraum vorgesehen sein. Durch die Anbringung des Vakuumbauteils an oder auf der Leiterplatte kann eine Bauraumreduzierung erreicht werden, insbesondere im Vergleich zu einem direkt am Gehäuse angebrachten Ventil, das groß baut und nach außen vom Gehäuse weg steht.

Ferner können elektrische Leitungen und/oder elektrische bzw. elektronische Komponenten für das Vakuumbauteil auf der Leiterplatte angeordnet werden, wodurch eine Vereinfachung erreicht und der Bauraum weiter reduziert werden kann, insbesondere im Vergleich zu einer separaten Verkabelung, die entfallen kann.

Durch die Anordnung des Vakuumbauteils an oder auf der Leiterplatte lassen sich außerdem Kosten bei der Herstellung einsparen, da das Gehäuse einfach realisiert werden kann.

Da die Leiterplatte vorzugsweise in dem Gehäuse untergebracht ist und/oder von einer Abdeckung oder dergleichen verdeckt ist, befindet sich das Vakuumbauteil an einer geschützten Stelle, wodurch die Robustheit der erfindungsgemäßen Vakuumvorrichtung verbessert werden kann.

Mit dem Begriff "Fluidverbindung" ist insbesondere eine Fluidleitung, wie bspw. ein Kanal, für Fluid bzw. Gas gemeint, die durch das Vakuumbauteil hindurch vom Innenraum zum Außenraum verlaufen kann.

Das Vakuumbauteil kann ein Ventil, insbesondere ein Miniaturventil sein. Miniaturventile sind aus dem Stand der Technik bekannt.

Das Ventil bzw. das Miniaturventil kann als Bauteil auf die Leiterplatte gelötet sein. Das Ventil kann elektrisch betätigbar sein. Elektrische Leitungen und/oder elektrische oder elektronische Komponenten des Ventils können zumindest teilweise auf der Leiterplatte angeordnet sein.

Das Ventil kann zwei Anschlüsse aufweisen. Das Ventil kann zwischen einem geschlossenen Zustand und einem geöffneten Zustand schaltbar sein.

Das Ventil kann zum Belüften des Innenraums der Vakuumvorrichtung vorgesehen sein. Dabei ist es vorteilhaft, wenn sich die Fluidverbindung durch das Ventil vom Innenraum zum Außenraum erstreckt. Bei geöffnetem Ventil kann über die Fluidverbindung der Innenraum mit Gas aus dem Außenraum, insbesondere der Atmosphäre, geflutet werden.

Das Ventil kann auch als Sperrgasventil zum Einbringen von Sperrgas in den Innenraum vorgesehen sein. Dabei kann sich die Fluidverbindung vom Innenraum zu einem Anschluss für Sperrgas im Außenraum erstrecken.

Das Vakuumbauteil kann ein Messgerät sein, insbesondere ein Durchflusswächter oder ein Durchflussmessgerät. Die Fluidverbindung kann durch das Messgerät vom Innenraum zum Außenraum verlaufen, insbesondere durch die Leiterplatte.

Vorzugsweise ist der Innenraum mit dem Außenraum über die Fluidverbindung und das Vakuumbauteil verbindbar oder verbunden.

Die Fluidverbindung verläuft, insbesondere als wenigstens ein Kanal, bevorzugt durch die Leiterplatte. Die Fluidverbindung kann somit wenigstens teilweise in der Leiterplatte untergebracht sein. Die Leiterplatte kann, insbesondere als Teil des Gehäuses, zur Trennung des Innenraums vom Außenraum beitragen.

In einer Weiterbildung der Erfindung ist wenigstens eine elektrische oder elektronische Komponente des Vakuumbauteils, insbesondere wenigstens eine elektrische Leitung zur Stromversorgung des Vakuumbauteils, zumindest teilweise auf oder an der Leiterplatte angeordnet und/oder durch die Leiterplatte hindurchgeführt. Eine Verkabelung für das Vakuumbauteil kann dadurch zumindest teilweise eingespart werden.

Die Leiterplatte kann, insbesondere elektrische, Durchführungen aufweisen. Mittels der Leiterplatte können somit auch elekrische Leitungen vom Außenraum in den Innenraum geführt werden.

Die Fluidverbindung umfasst bevorzugt eine Kapillare, die - längs der Fluidverbindung gesehen - dem Vakuumbauteil vor oder nachgeordnet ist. Bei der Kapillare kann es sich insbesondere um einen engen Abschnitt der Fluidverbindung handeln, welcher den Strömungsquerschnitt der Fluidverbindung verengt. Besonders vorteilhaft kommt die Kapillare in Verbindung mit einem Ventil, insbesondere Miniaturventil, als Vakuumbauteil zur Anwendung, welches als Flutventil eingesetzt wird, um geringe Mengen an Gas in den Innenraum einzuleiten.

Die Kapillare kann außerhalb der Leiterplatte angeordnet sein. Die Kapillare kann beispielsweise als zusätzliches Bauteil an der Leiterplatte angeordnet, insbesondere angelötet, sein.

Die Kapillare wird vorzugsweise von einem, insbesondere engen, Kanalabschnitt, der in der Leiterplatte verläuft, gebildet. Für die Kapillare muss somit kein zusätzliches, separates Bauteil bereitgestellt werden. Der die Kapillare bildende Kanalabschnitt kann insbesondere gegenüber dem übrigen Kanal einen engeren Querschnitt aufweisen.

Der die Kapillare bildende Kanalabschnitt kann wenigstens ein Teil eines in der Leiterplatte verlaufenden Kanals sein, welcher den Innenraum mit einem ersten Anschluss des Vakuumbauteils oder einen zweiten Anschluss des Vakuumbauteils mit dem Außenraum verbindet. Die Kapillare ist somit - längs der Fluidverbindung bzw. längs des Kanals gesehen - dem Vakuumbauteil entweder vor- oder nachgeordnet.

Das Vakuumbauteil kann an einer Oberseite der Leiterplatte angeordnet sein und wenigstens ein Anschluss des Vakuumbauteils kann an der Oberseite der Leiterplatte liegen und in einen in der Leiterplatte verlaufenden Kanal der Fluidverbindung münden. Die Fluidverbindung kann somit direkt vom in der Leiterplatte verlaufenden Kanal in den Anschluss des Vakuumbauteils übergehen. Ein zusätzliches Anschlusselement kann daher eingespart werden.

Das Vakuumbauteil kann, insbesondere wenn es ein Durchgangsventil, Durchflussmessgerät oder Durchflusswächter ist, einen ersten und zweiten Anschluss aufweisen und ein in der Leiterplatte verlaufender erster Kanal kann den ersten Anschluss mit dem Innenraum und ein in der Leiterplatte verlaufender zweiter Kanal kann den zweiten Anschluss mit dem Außenraum verbinden. Die durch das Vakuumbauteil verlaufende Fluidverbindung kann in diesem Fall ausschließlich aus den zwei Kanälen gebildet sein, so dass diese besonders kompakt und kostengünstig ausgestaltet werden kann.

Vorteilhaft ist es, wenn die Leiterplatte derart an der Vakuumvorrichtung angeordnet ist, dass die, insbesondere zur Oberseite parallele, Unterseite der Leiterplatte dem Innenraum zugewandt ist und der erste Kanal, insbesondere senkrecht zur Ober- bzw. Unterseite, durch die Leiterplatte hindurch von der Oberseite zur Unterseite verläuft. Die Unterseite kann eine Begrenzung des Innenraums bilden oder derart an der Außenseite des Gehäuses angeordnet sein, dass der erste Kanal in den Innenraum münden kann.

In einer bevorzugten Weiterbildung der Erfindung ist die Unterseite der Leiterplatte an der Außenseite einer Wand des Gehäuses derart angeordnet, dass der in den ersten Anschluss des Vakuumbauteils mündende erste Kanal mit einer in der Wand ausgebildeten Öffnung, die sich durch die Wand hindurch in den Innenraum erstreckt, ausgerichtet ist.

Der zweite Kanal mündet bevorzugt an der Oberseite oder an einem seitlichen Rand der Leiterplatte in den Außenraum.

Der Begriff "Leiterplatte" ist breit zu verstehen. Dabei kann es sich um eine Art Trägerplatte aus nicht leitendem Material handeln, die Bereiche aus elektrisch leitendem Material, wie etwa Durchführungen oder Leiterbahnen, umfasst. Auch eine Leiterplatte ohne derartige elektrisch leitende Bereiche kann noch als Leiterplatte angesehen werden. Bevorzugt handelt es sich bei der Leiterplatte um eine Leiterplatte im herkömmlichen Sinne, also um eine Platine oder ein "printed circuit board".

Die Leiterplatte kann mehrere, insbesondere parallel zu ihrer Oberseite bzw. Unterseite verlaufende, Lagen aufweisen. Die Lagen sind vorzugsweise aus elektrisch nicht leitendem Material ausgestaltet, welches bevorzugt eine hohe Vakuumdichtheit und/oder eine geringe Ausgasung aufweist. Auf wenigstens einer Oberfläche der Leiterplatte kann wenigstens eine Leiterbahn aus einem elektrisch leitenden Material angeordnet sein.

Die Leiterplatte kann wenigstens drei Lagen aufweisen und wenigstens ein Kanalabschnitt kann in einer der mittleren Lagen verlaufen. Vorzugsweise verläuft der zweite Kanal wenigstens abschnittsweise in der mittleren Lage und parallel zur Oberseite und Unterseite der Leiterplatte.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine Querschnittsansicht einer ersten Variante einer erfindungsgemäßen Vorrichtung,
- Fig. 7: eine Querschnittsansicht einer zweiten Variante einer erfindungsgemäßen Vorrichtung,
- Fig. 8: eine Querschnittsansicht einer dritten Variante einer erfindungsgemäßen Vorrichtung, und
- Fig. 9: eine Querschnittsansicht einer vierten Variante einer erfindungsgemäßen Vorrichtung.

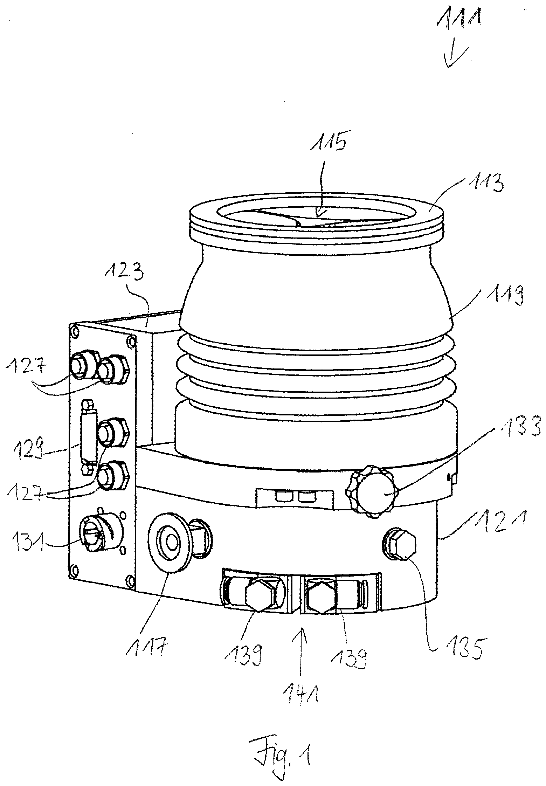

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

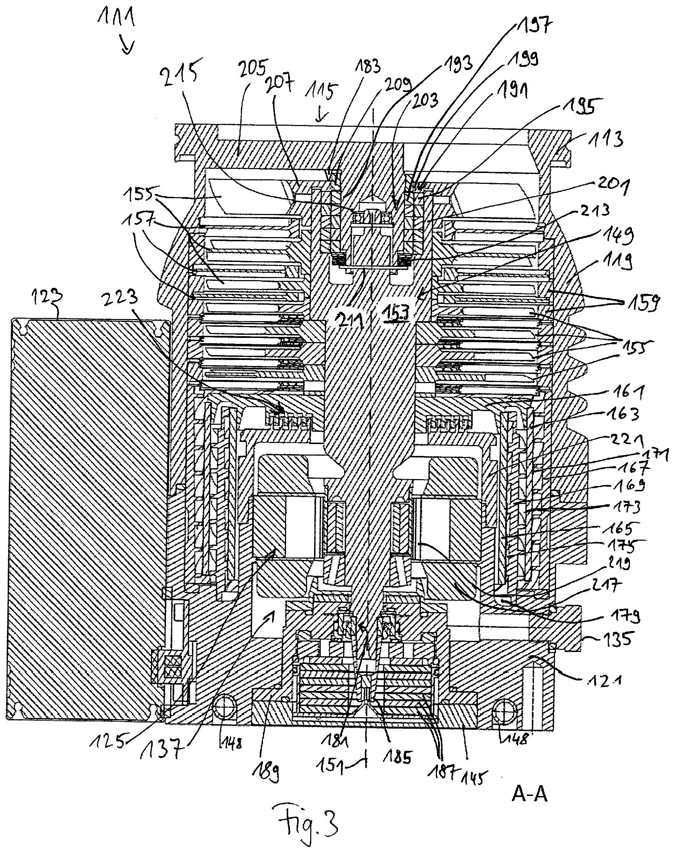

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

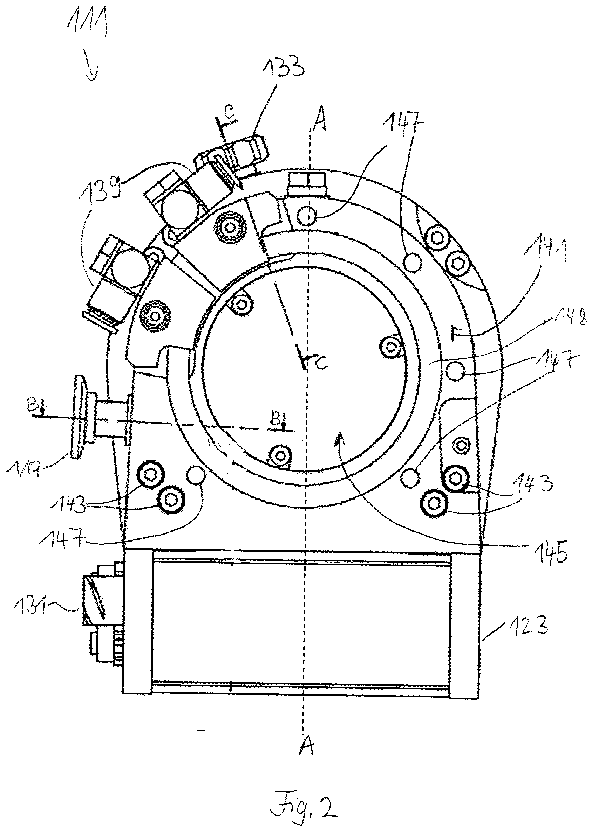

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

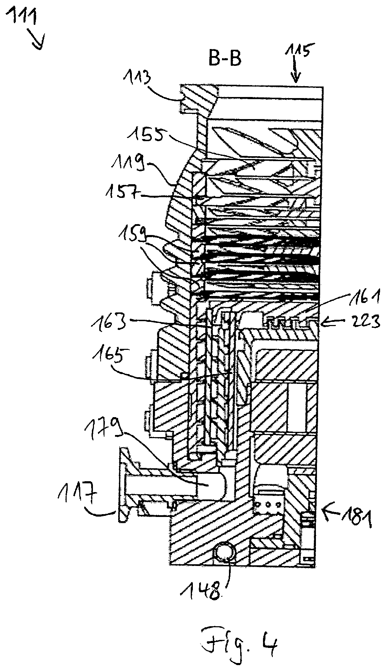

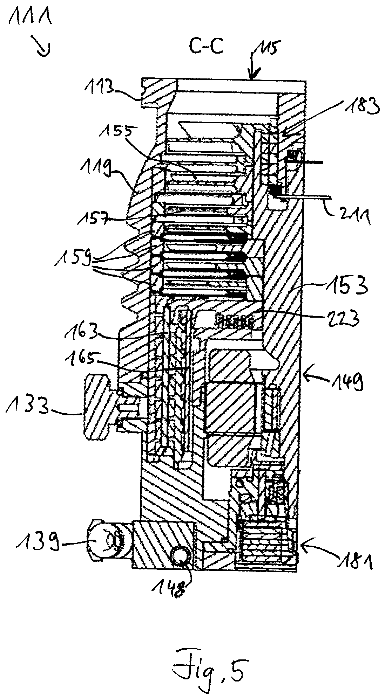

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

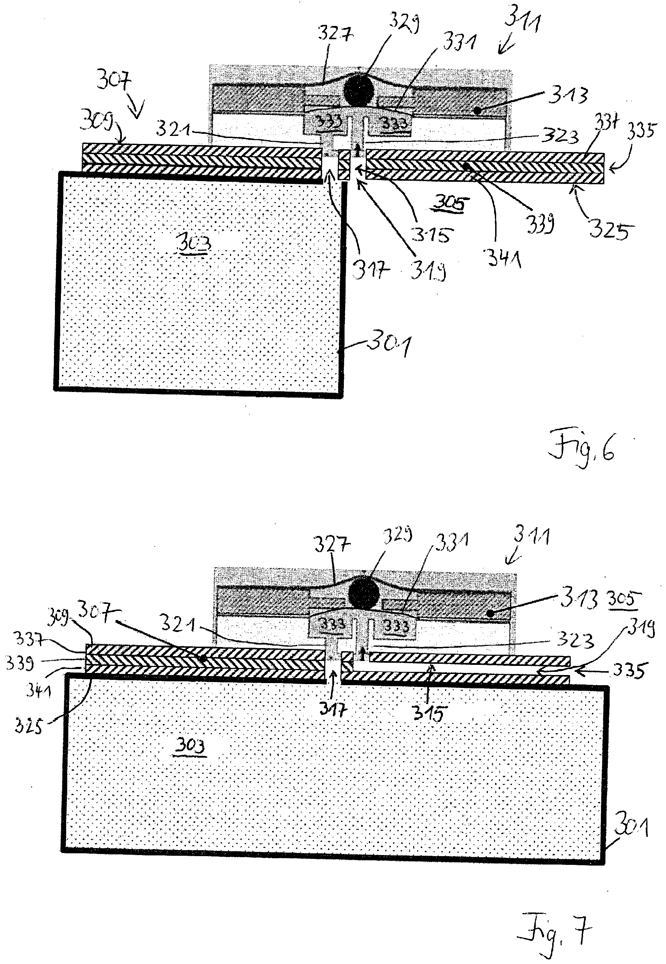

Die Fig. 6 zeigt eine erste Variante einer erfindungsgemäßen Vakuumvorrichtung, die ein Gehäuse 301 aufweist, das wenigstens einen Innenraum 303 umgibt, in welchem ein Vakuum erzeugbar ist, und das den Innenraum 303 von einem Außenraum 305, bei dem es sich insbesondere um die Atmosphäre handelt, trennt. Die Vakuumvorrichtung weist außerdem eine Leiterplatte 307 auf, die am Gehäuse 301 angeordnet ist. Auf der Oberseite 309 der Leiterplatte 307 ist wenigstens ein von Fluid, insbesondere Gas aus dem Innenraum 303 bzw. aus der Atmosphäre 305, durchströmbares Vakuumbauteil 311 angeordnet. Bei dem Vakuumbauteil 311 handelt es sich um ein Miniaturventil 313, das auf die Oberseite 309 der Leiterplatte 307 aufgelötet ist.

Die Vakuumvorrichtung weist eine Fluidverbindung 315 auf, die durch das Miniaturventil 313 geführt ist und über die der Innenraum 303 mit dem Außenraum 305 in Verbindung gebracht werden kann.

Das Miniaturventil 313 weist einen ersten Anschluss 321 und einen zweiten Anschluss 323 auf. Das Miniaturventil 313 ist derart ausgestaltet, dass die beiden Anschlüsse 321, 323 auf der Unterseite des Miniaturventils 313 liegen, die der Leiterplatte 307 zugewandt ist. Die beiden Anschlüsse 321 und 323 liegen somit an der Oberseite 309 der Leiterplatte 307.

Wie Fig. 6 zeigt, weist die Fluidverbindung 315 einen ersten Kanal 317 auf, der sich von der Unterseite 325 der Leiterplatte 307 zur Oberseite 309 der Leiterplatte 307 erstreckt und in den ersten Anschluss 321 mündet. Die Leiterplatte 307 ist derart an der Außenseite des Gehäuses 301 angeordnet, dass die Unterseite 325 dem Innenraum 303 zugewandt ist und eine in der Gehäusewand vorgesehene Öffnung in den Innenraum 303 mit dem ersten Kanal 317 ausgerichtet ist.

Wie die Fig. 6 zeigt, weist die Fluidverbindung 315 einen zweiten Kanal 319 auf, der in den zweiten Anschluss 323 mündet und von der Oberseite 309 zur Unterseite 325 der Leiterplatte 307 verläuft. An der Unterseite 325 mündet der zweite Kanal 319 in den Außenraum 305.

Das Miniaturventil 311 ist in Fig. 6, wie auch in den Fig. 7 bis 9, in geöffnetem Zustand dargestellt. Neben dem geöffneten Zustand weist das Miniaturventil 313 noch einen geschlossenen Zustand auf, in welchem die Fluidverbindung zwischen den beiden Anschlüssen 321, 323 unterbrochen ist. Das Miniaturventil 313 kann als monostabiles Miniaturventil realisiert sein, das sich normalerweise im geschlossenen Zustand befindet und durch eine entsprechende Ansteuerung in den geöffneten Zustand gebracht werden kann. Auch der umgekehrte Fall kann möglich sein. Das Miniaturventil 313 kann sich normalerweise im geöffneten Zustand befinden und durch entsprechende Ansteuerung in den geschlossenen Zustand gebracht werden.

Bei dem Miniaturventil 313 kann eine strukturierte Folie 327 aus einer Formgedächtnislegierung als Aktorelement für die Ventilbetätigung eingesetzt werden. Die strukturierte Folie 327 sitzt bei der im normalen Zustand offenen Variante eines Mikrostrukturventils 313, wie in Fig. 6 gezeigt ist, über einer kleinen Kugel 329. Wird die Formgedächtnislegierung mittels einer geeigneten elektrischen Spannung betätigt, erinnert sie sich an ihre zuvor eingeprägte Form und drückt innerhalb weniger Millisekunden die Kugel 329 gegen eine Dichtungsmembran 331. Diese dichtet dann einen Medienraum 333 ab, welcher auf der, der Kugel 329 gegenüberliegenden Seite der Dichtungsmembran 331 liegt und in den die beiden Anschlüsse 321, 323 münden. Die beiden Anschlüsse 321, 323 werden dadurch voneinander getrennt. Wird die Spannungsversorgung zur Betätigung der Folie 327 unterbrochen, kühlt diese durch ihr großes Oberflächen-Volumen-Verhältnis sehr schnell unter eine spezifische Umwandlungstemperatur ab. Sie kann dann leicht durch eine äußere Kraft verformt werden. Insbesondere kann der über den zweiten Anschluss 323 wirkende atmosphärische Druck die Kugel 329 anheben und somit die Fluidverbindung zwischen den beiden Anschlüssen 321, 323 wieder herstellen.

Bei der nicht dargestellten Normal-Geschlossen-Version eines Miniaturventils 313 drückt eine Spiralfeder im stromlosen Zustand die Folie 327 und die Kugel 329 gegen die Dichtungsmembran 331. Unter elektrischer Spannung überwindet die Folie 327 aufgrund der Formgedächtnislegierung die Federkraft, wodurch sich die Dichtungsmembran 331 aus dem Ventilsitz hebt und eine Fluidverbindung zwischen den beiden Anschlüssen 321 und 323 freigibt.

Bei der Vorrichtung der Fig. 6 kann es sich, wie auch bei den nachstehend noch näher beschriebenen Vorrichtungen der Fig. 7 bis 9, um eine Turbomolekularpumpe 111 handeln, wie sie beispielhaft vorstehend mit Bezug auf die Fig. 1 bis 5 beschrieben wurde. Das Gehäuse 301 kann dann der Kombination aus dem Gehäuse 119 und dem Unterteil 121 entsprechen. Die Anordnung mit der Platine 307 und dem Miniaturventil 313 kann derart an der Turbomolekularpumpe 111 angeordnet sein, dass sie als Flutventil dienen kann (vgl. den Fluteinlass 113 der Turbomolekularpumpe 111). In diesem Fall ist das Miniaturventil 313 bevorzugt so ausgestaltet, dass im Normalzustand, also im nicht aktivierten Zustand des Formgedächtnismaterials, die Kugel 329 die beiden Anschlüsse 321 und 323 voneinander trennt. Im aktivierten Zustand des Formgedächtnismaterials kann dagegen die Verbindung zwischen den beiden Anschlüssen 321 und 323 geöffnet werden, so dass die Turbomolekularpumpe 111 über den Fluteinlass 133 mit Luft aus dem Außenraum geflutet werden kann.

Wie Fig. 6 außerdem zeigt, weist die Leiterplatte 307 eine obere Lage 337, eine mittlere Lage 339 und eine untere Lage 341 auf. Die Lagen 337 bis 341 können aus dem gleichen Material oder aus unterschiedlichen Materialien hergestellt sein. Die sich aneinander anschließenden Oberflächen der Lagen können miteinander verklebt oder durch eine andere geeignete Weise, insbesondere vakuumdicht, miteinander verbunden sein.

Die zweite Variante gemäß der Fig. 7 unterscheidet sich von der ersten Variante gemäß der Fig. 6 dadurch, dass der zweite Kanal 319 vom zweiten Anschluss 323 weg nach innen bis in die mittlere Lage 339 der Leiterplatte 307 geführt ist und in der mittleren Lage 339 parallel zur Oberseite 309 bzw. parallel zur Unterseite 325 zum seitlichen Rand 335 der Leiterplatte 307 verläuft. Am seitlichen Rand 335 mündet der zweite Kanal 319 in den Außenraum 305. Im Unterschied zu der ersten Variante gemäß Fig. 6, bei der der zweite Kanal 319 an der Unterseite 325 in den Außenraum 305 mündet, kann bei der zweiten Variante gemäß Fig. 7 die Unterseite 325 vollständig am Gehäuse 301 festgelegt werden, wie Fig. 7 zeigt.

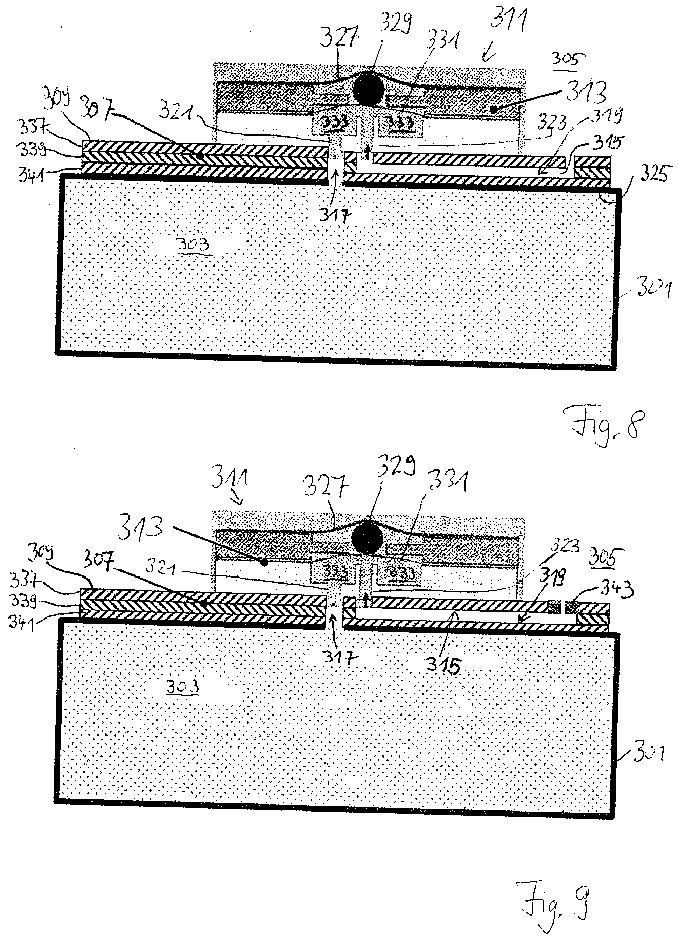

Die dritte Variante gemäß der Fig. 8 unterscheidet sich von der ersten Variante bzw. der zweiten Variante dadurch, dass der zweite Kanal 319 an der Oberseite 309 in den Außenraum 305 mündet.

Die vierte Variante gemäß der Fig. 9 unterscheidet sich von der dritten Variante gemäß der Fig. 8 im Wesentlichen dadurch, dass bei der vierten Variante der zweite Kanal 319 im Mündungsbereich in den Außenraum 305 eine Kapillare 343 aufweist, die von einem im Querschnitt verengten Abschnitt des Kanals 319 gebildet wird.

Die Anordnung aus Miniaturventil 313 und Platine 307 gemäß der Variante der Fig. 9 eignet sich insbesondere zur Verwendung als Sperrgasanschluss 335 in einer Turbomolekularpumpe 111. Dabei kann über die Fluidverbindung 315 und das Miniaturventil 313 Sperrgas in den Innenraum 303 gebracht werden, zum Beispiel um bei der Turbomolekularpumpe 111 den Elektromotor 125 (vgl. Fig. 3) zu schützen.

Bei den Varianten der Fig. 6 bis 9 ist das Vakuumbauteil 311 ein Miniaturventil 313. Alternativ kann es sich bei dem Vakuumbauteil 311 um ein Messgerät, insbesondere mit zwei Anschlüssen, handeln, zum Beispiel um einen Durchflusswächter oder um ein Durchflussmessgerät.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 301: Gehäuse
- 303: Innenraum
- 305: Außenraum, Atmosphäre
- 307: Leiterplatte
- 309: Oberseite
- 311: Vakuumbauteil
- 313: Miniaturventil
- 315: Fluidverbindung
- 317: erster Kanal
- 319: zweiter Kanal
- 321: erster Anschluss
- 323: zweiter Anschluss
- 325: Unterseite
- 327: Folie
- 329: Kugel
- 331: Dichtungsmembran
- 333: Medienraum
- 335: Rand
- 337: Lage
- 339: Lage
- 341: Lage
- 343: Kapillare

## Patentansprüche

1. Vakuumpumpe, insbesondere Turbomolekularpumpe (111), umfassend: ein Gehäuse (301, 119, 121), das wenigstens einen Innenraum (303) umgibt, in welchem ein Vakuum erzeugbar ist, und das den Innenraum (303) von einem Außenraum (305), insbesondere der Atmosphäre, trennt, und
wenigstens eine Leiterplatte (307), die im oder am Gehäuse (301, 119, 121) angeordnet ist, wobei an oder auf der Leiterplatte (307) wenigstens ein von Fluid durchströmbares Ventil (311, 313) oder Messgerät angeordnet ist, und eine mit dem Innenraum (303) und/oder dem Außenraum (305) in Verbindung stehende Fluidverbindung (315) durch das Ventil (311, 313) oder Messgerät geführt ist.

2. Vakuumpumpe nach Anspruch 1,
**dadurch gekennzeichnet, dass**
das Ventil ein Miniaturventil (313) ist.

3. Vakuumpumpe nach Anspruch 1,
**dadurch gekennzeichnet, dass**
das Messgerät ein Durchflusswächter oder ein Durchflussmessgerät ist.

4. Vakuumpumpe nach einem der vorhergehenden Ansprüche,
**dadurch gekennzeichnet, dass**
über die Fluidverbindung (315) und das Ventil (311, 313) oder das Messgerät der Innenraum (303) mit dem Außenraum (305) verbindbar oder verbunden ist, und/oder dass die Fluidverbindung (315), insbesondere als wenigstens ein Kanal (317, 319), durch die Leiterplatte (307) verläuft.

5. Vakuumpumpe nach einem der vorhergehenden Ansprüche,
**dadurch gekennzeichnet, dass**
die Leiterplatte (307), insbesondere als Teil des Gehäuses, zur Trennung des Innenraums (303) vom Außenraum (305) beiträgt.

6. Vakuumpumpe nach einem der vorhergehenden Ansprüche,
**dadurch gekennzeichnet, dass**
wenigstens eine elektrische oder elektronische Komponente des Ventils (311, 313) oder des Messgeräts, insbesondere wenigstens eine elektrische Leitung zur Stromversorgung des Ventils (311, 313) oder des Messgeräts, zumindest teilweise auf oder an der Leiterplatte (307) angeordnet und/oder durch die Leiterplatte (307) hindurchgeführt ist, und/oder
dass die Leiterplatte (307), insbesondere elektrische, Durchführungen aufweist.

7. Vakuumpumpe nach einem der vorhergehenden Ansprüche,
**dadurch gekennzeichnet, dass**
die Fluidverbindung (315, 317, 319) wenigstens eine Kapillare (343) umfasst, welche längs der Fluidverbindung (315, 317, 319) gesehen dem Ventil (311, 313) oder Messgerät vor- oder nachgeordnet ist.

8. Vakuumpumpe nach Anspruch 7,
**dadurch gekennzeichnet, dass**
die Kapillare (343) außerhalb der Leiterplatte (307) angeordnet ist.

9. Vakuumpumpe nach Anspruch 7,
**dadurch gekennzeichnet, dass**
die Kapillare (343) von einem, insbesondere engen, Abschnitt eines Kanals (317, 319), der in der Leiterplatte (307) verläuft, gebildet ist.

10. Vakuumpumpe nach Anspruch 9,
**dadurch gekennzeichnet, dass**
das Ventil (311, 313) oder Messgerät einen ersten und zweiten Anschluss (321, 323) aufweist und der Kanal (317, 319) mit der Kapillare (343) entweder den Innenraum (303) mit dem ersten Anschluss (321) oder den Außenraum (305) mit dem zweiten Anschluss (323) verbindet.

11. Vakuumpumpe nach einem der vorhergehenden Ansprüche,
**dadurch gekennzeichnet, dass**
das Ventil (311, 313) oder Messgerät an einer Oberseite (309) der Leiterplatte (307) angeordnet ist und wenigstens ein Anschluss (321, 323) des Ventils (311, 313) oder Messgeräts an der Oberseite (309) der Leiterplatte (307) liegt und, insbesondere unmittelbar, in einen in der Leiterplatte (307) verlaufenden Kanal (317, 319) der Fluidverbindung (315) mündet.

12. Vakuumpumpe nach Anspruch 11,
**dadurch gekennzeichnet, dass**
das Ventil (311, 313) oder Messgerät einen ersten und zweiten Anschluss (321, 323) aufweist und ein in der Leiterplatte (307) verlaufender erster Kanal (317) den ersten Anschluss (321) mit dem Innenraum (303) und ein in der Leiterplatte (307) verlaufender zweiter Kanal (319) den zweiten Anschluss (323) mit dem Außenraum (305) verbindet.

13. Vakuumpumpe nach Anspruch 11 oder 12,
**dadurch gekennzeichnet, dass**
die Leiterplatte (307) am Gehäuse (301, 119, 121) derart angeordnet ist, dass die, insbesondere zur Oberseite (309) parallele, Unterseite (325) der Leiterplatte (307) dem Innenraum (303) zugewandt ist und ein erster Kanal (317), insbesondere senkrecht zur Ober- bzw. Unterseite (309, 325), durch die Leiterplatte (307) hindurch von der Oberseite (309) zur Unterseite (325) verläuft.

14. Vakuumpumpe nach Anspruch 12 oder 13,
**dadurch gekennzeichnet, dass**
der zweite Kanal (319) an der Oberseite (309), der Unterseite (325) oder an einem seitlichen Rand (335) der Leiterplatte (307) in den Außenraum (305) mündet.

15. Vakuumpumpe nach einem der vorhergehenden Ansprüche,
**dadurch gekennzeichnet, dass**
die Leiterplatte (307) mehrere, insbesondere parallel zu ihrer Oberseite (309) bzw. Unterseite (325) verlaufende, Lagen (337, 339, 341) aufweist, wobei, bevorzugt, die Leiterplatte (307) wenigstens drei Lagen (337, 339, 341) aufweist und wenigstens ein Abschnitt eines Kanals (317, 319) in einer der mittleren Lagen (339) verläuft, insbesondere parallel zur Ober- und/oder Unterseite (309, 325).

## Claims

1. A vacuum pump, in particular a turbomolecular pump (111), comprising:
a housing (301, 119, 121) which surrounds at least one inner space (303) in which a vacuum can be generated and which separates the inner space (303) from an outer space (305), in particular from the atmosphere; and
at least one circuit board (307) which is arranged in or at the housing (301, 119, 121),
wherein
at least one valve (311, 313) or one measurement device which can be flowed through by fluid is arranged at or on the circuit board (307) and a fluid connection (315) in communication with the inner space (303) and/or with the outer space (305) is led through the valve (311, 313) or through the measurement device.

2. A vacuum pump in accordance with claim 1,
**characterized in that**
the valve is a miniature valve (313).

3. A vacuum pump in accordance with claim 1,
**characterized in that**
the measurement device is a flow monitor or a flow meter.

4. A vacuum pump in accordance with any one of the preceding claims,
**characterized in that**
the inner space (303) is connectable or connected to the outer space (305) via the fluid connection (315) and the valve (311, 313) or the measurement device; and/or **in that** the fluid connection (315), in particular as at least one passage (317, 319), extends through the circuit board (307).

5. A vacuum pump in accordance with any one of the preceding claims,
**characterized in that**
the circuit board (307), in particular as a part of the housing, contributes to a separation of the inner space (303) from the outer space (305).

6. A vacuum pump in accordance with any one of the preceding claims,
**characterized in that**
at least one electrical or electronic component of the valve (311, 313) or of the measurement device, in particular at least one electrical line for the power supply of the valve (311, 313) or of the measurement device, is at least partly arranged on or at the circuit board (307) and/or is led through the circuit board (307);
and/or
**in that** the circuit board (307) has leadthroughs, in particular electrical leadthroughs.

7. A vacuum pump in accordance with any one of the preceding claims,
**characterized in that**
the fluid connection (315, 317, 319) comprises at least one capillary (343) which is arranged upstream or downstream of the valve (311, 313) or of the measurement device viewed along the fluid connection (315, 317, 319).

8. A vacuum pump in accordance with claim 7,
**characterized in that**
the capillary (343) is arranged outside the circuit board (307).

9. A vacuum pump in accordance with claim 7,
**characterized in that**
the capillary (343) is formed by a section, in particular a narrow section, of a passage (317, 319) which extends in the circuit board (307).

10. A vacuum pump in accordance with claim 9,
**characterized in that**
the valve (311, 313) or the measurement device has a first and second connector (321, 323) and the passage (317, 319) with the capillary (343) connects either the inner space (303) to the first connector (321) or the outer space (305) to the second connector (323).

11. A vacuum pump in accordance with any one of the preceding claims,
**characterized in that**
the valve (311, 313) or the measurement device is arranged at an upper side (309) of the circuit board (307) and at least one connector (321, 323) of the valve (311, 313) or of the measurement device is disposed at the upper side (309) of the circuit board (307) and opens, in particular directly, into a passage (317, 319) of the fluid connection (315) extending in the circuit board (307).

12. A vacuum pump in accordance with claim 11,
**characterized in that**
the valve (311, 313) or the measurement device has a first and second connector (321, 323) and a first passage (317) extending in the circuit board (307) connects the first connector (321) to the inner space (303) and a second passage (319) extending in the circuit board (307) connects the second connector (323) to the outer space (305).

13. A vacuum pump in accordance with claim 11 or claim 12,
**characterized in that**
the circuit board (307) is arranged at the housing (301, 119, 121) such that the lower side (325) of the circuit board (307) which is in particular in parallel with the upper side (309) faces the inner space (303) and a first passage (317) extends through the circuit board (307) from the upper side (309) to the lower side (325) and in particular perpendicular to the upper side or lower side (309, 325).

14. A vacuum pump in accordance with claim 12 or claim 13,
**characterized in that**
the second passage (319) opens into the outer space (305) at the upper side (309), at the lower side (325) or at a lateral margin (335) of the circuit board (307).

15. A vacuum pump in accordance with any one of the preceding claims,
**characterized in that**
the circuit board (307) has a plurality of layers (337, 339, 341) which in particular extend in parallel with its upper side (309) or with its lower side (325), with, preferably, the circuit board (307) having at least three layers (337, 339, 341), and with at least one section of a passage (317, 319) extending in one of the middle layers (339), in particular in parallel with the upper side and/or lower side (309, 325).

## Revendications

1. Pompe à vide, en particulier pompe turbomoléculaire (111), comportant :
un boîtier (301, 119, 121) qui entoure au moins un volume intérieur (303) dans lequel il est possible de créer un vide, et qui sépare le volume intérieur (303) d'un volume extérieur (305), en particulier de l'atmosphère, et
au moins une carte à circuits (307) qui est agencée dans ou au niveau du boîtier (301, 119, 121),
dans laquelle
au moins une vanne (311, 313) ou un appareil de mesure susceptible d'être traversé(e) par un fluide est agencé(e) au niveau de ou sur la carte à circuits (307), et une liaison fluidique (315) en communication avec le volume intérieur (303) et/ou avec le volume extérieur (305) est menée à travers la vanne (311, 313) ou l'appareil de mesure.

2. Pompe à vide selon la revendication 1,
**caractérisée en ce que**
la vanne est une vanne miniature (313).

3. Pompe à vide selon la revendication 1,
**caractérisée en ce que**
l'appareil de mesure est un contrôleur de débit ou un débitmètre.

4. Pompe à vide selon l'une des revendications précédentes,
**caractérisée en ce que**
le volume intérieur (303) est susceptible d'être relié au volume extérieur (305) via la liaison fluidique (315) et via la vanne (311, 313) ou l'appareil de mesure, et/ou **en ce que**
la liaison fluidique (315) s'étend à travers la carte à circuits (307) en particulier sous la forme d'au moins un canal (317, 319).

5. Pompe à vide selon l'une des revendications précédentes,
**caractérisée en ce que**
la carte à circuits (307), faisant en particulier partie du boîtier, contribue à séparer le volume intérieur (303) du volume extérieur (305).

6. Pompe à vide selon l'une des revendications précédentes,
**caractérisée en ce que**
au moins un composant électrique ou électronique de la vanne (311, 313) ou de l'appareil de mesure, en particulier au moins une ligne électrique pour alimenter en courant la vanne (311, 313) ou l'appareil de mesure, est agencé(e) au moins partiellement sur ou au niveau de la carte à circuits (307) et/ou traverse la carte à circuits (307),
et/ou
**en ce que** la carte à circuits (307) comprend des traversées en particulier électriques.

7. Pompe à vide selon l'une des revendications précédentes,
**caractérisée en ce que**
la liaison fluidique (315, 317, 319) comprend au moins un capillaire (343) qui, vu le long de la liaison fluidique (315, 317, 319), est agencé en amont ou en aval de la vanne (311, 313) ou de l'appareil de mesure.

8. Pompe à vide selon la revendication 7,
**caractérisée en ce que**
le capillaire (343) est agencé à l'extérieur de la carte à circuits (307).

9. Pompe à vide selon la revendication 7,
**caractérisée en ce que**
le capillaire (343) est formé par une portion en particulier étroite d'un canal (317, 319) qui s'étend dans la carte à circuits (307).

10. Pompe à vide selon la revendication 9,
**caractérisée en ce que**
la vanne (311, 313) ou l'appareil de mesure comprend un premier et un second raccord (321, 323), et le canal (317, 319) pourvu du capillaire (343) relie soit le volume intérieur (303) au premier raccord (321) soit le volume extérieur (305) au second raccord (323).

11. Pompe à vide selon l'une des revendications précédentes,
**caractérisée en ce que**
la vanne (311, 313) ou l'appareil de mesure est agencé(e) au niveau d'une face supérieure (309) de la carte à circuits (307), et au moins un raccord (321, 323) de la vanne (311, 313) ou de l'appareil de mesure se trouve au niveau de la face supérieure (309) de la carte à circuits (307) et débouche en particulier directement dans un canal (317, 319) de la liaison fluidique (315), lequel s'étend dans la carte à circuits (307).

12. Pompe à vide selon la revendication 11,
**caractérisée en ce que**
la vanne (311, 313) ou l'appareil de mesure comprend un premier et un second raccord (321, 323), et un premier canal (317) s'étendant dans la carte à circuits (307) relie le premier raccord (321) au volume intérieur (303) et un second canal (319) s'étendant dans la carte à circuits (307) relie le second raccord (323) au volume extérieur (305).

13. Pompe à vide selon la revendication 11 ou 12,
**caractérisée en ce que**
la carte à circuits (307) est agencée au niveau du boîtier (301, 119, 121) de telle sorte que la face inférieure (325) de la carte à circuits (307), en particulier parallèle à la face supérieure (309), est tournée vers le volume intérieur (303), et un premier canal (317) s'étend à travers la carte à circuits (307) depuis la face supérieure (309) vers la face inférieure (325), en particulier perpendiculairement à la face supérieure ou inférieure (309, 325).

14. Pompe à vide selon la revendication 12 ou 13,
**caractérisée en ce que**
le second canal (319) débouche dans le volume extérieur (305) au niveau de la face supérieure (309), de la face inférieure (325) ou d'un bord latéral (335) de la carte à circuits (307).

15. Pompe à vide selon l'une des revendications précédentes,
**caractérisée en ce que**
la carte à circuits (307) comprend plusieurs couches (337, 339, 341) s'étendent en particulier parallèlement à sa face supérieure (309) ou à sa face inférieure (325), et
de préférence, la carte à circuits (307) comprend au moins trois couches (337, 339, 341), et au moins une portion d'un canal (317, 319) s'étend dans l'une des couches centrales (339), en particulier parallèlement à la face supérieure et/ou inférieure (309, 325).
